# EUROPEAN PATENT APPLICATION

(11) **EP 0 919 948 A1**
(43) Date of publication of application: **02.06.1999**
(21) Application number: 97203722.0
(22) Date of filing: 28.11.1997
(51) Int. Cl.: G06K 11/18, G06F 3/033

(54) **Computer accessory**

(71) Applicant: GLAVERBEL, 1170 Bruxelles (BE)
(72) Inventor: Lambrechts, Alphonse, 1090 Bruxelles (BE); Jardinet, Alain, 1450 Villeroux (BE); Zaharakis, Dimitri, 1860 Meise (BE)
(74) Representative: Farmer, Guy

(57) **Abstract**

A mouse mat has a working surface over which a computer mouse is intended to be moved which is made wholly or partially of glass or of a glass like material. The working surface may have an embossed pattern or other friction surface to enhance contact between the mouse mat and a computer mouse. The mouse mat may, in addition, display an advertisement, a publicity message or a promotional material.

## Description

This invention relates to computer mouse mats.

A computer mouse mat may provide one or more of the following characteristics:
a) sufficient grip or resistance for the weighted ball of the mouse on the mouse mat's working surface (i.e. the surface over which the computer mouse is moved to displace, for example, an on-screen computer cursor) to ensure that the signals generated by rotation of the ball correspond substantially to the movement to which a user subjects the mouse (if the ball slides rather than rolls across the mouse mat then the movement of the on-screen cursor will not follow the user's movement of the mouse)
b) sufficient friction between the mouse and the mouse mat to prevent the mouse moving without interaction of the user, for example due to forces exerted by the mouse's connecting wire or if a surface on which the mouse and mouse mat rest is jolted or is not perfectly horizontal
c) an agreeable "feel" for the user moving the mouse over the mouse mat
d) a means for limiting dust and dirt from being carried by the ball of the mouse to interfere with operation of the mouse's sensors
e) a decorative function (for example, the mouse mat may display a picture or show some kind of publicity message).

Mouse mats are commonly constructed from a sheet of foam rubber (which gives a cushioning effect) provided with a textile working surface. Whilst this construction satisfies many of the requirements for these products, it is not without its disadvantages. For example, textile portions of the mat, particularly its edges, may age, discolour or fray with time and use so that the mouse mat becomes unsightly. In addition, such mouse mats are difficult to clean if, for example, something is spilt on them.

According to a first aspect, the present invention provides a mouse mat as defined in Claim 1.

The glass surface provides a durable finish which is resistant to ageing and is easy to clean. The glass like material may be, for example, a rigid, substantially planar, self supporting plastics material. The glass or glass like material may be clear, transparent, translucent, coloured or opaque.

Toughening the glass increases its durability, reduces the risk of the glass breaking due to impact and increases its safety. Tempering is a particularly suitable and cost effective form of toughening.

A friction surface may enhance contact between the working surface of the mouse mat and a mouse. The friction surface may be provided, for example, by roughing the surface of the glass, by sandblasting, by coating with a friction increasing layer, by printing a layer or a pattern on the surface of the glass or in some other way. A surface relief provided in the glass, and particularly a surface relief of regular patterned glass may provide a suitable friction surface.

According to a second aspect, the invention provides a publicity item as defined in Claim 14. The publicity article may be used to promote a company image

or product; it may be used as a novel gift in a similar way to the way in which pens and other items of stationary bearing a company's name or brand are distributed to clients and potential clients. It may be a particularly appropriate publicity item for a company that manufactures glass and especially patterned glass. Particularly in this latter case, the working surface may comprise one or more of the patterns in which the company makes patterned glass and serve in this way not only as a publicity item but also as a product sample.

An example of the invention will now be described, by way of example only, with reference to the accompanying drawings of which:
Fig. 1 is a plan view of a mouse mat in accordance with the present invention;
Fig. 2 is greatly enlarged schematic cross sectional side view showing a portion of the surface relief of the mouse mat along axis x of Fig. 1; and
Fig. 3 is aside view of the mouse mat of Fig. 1.

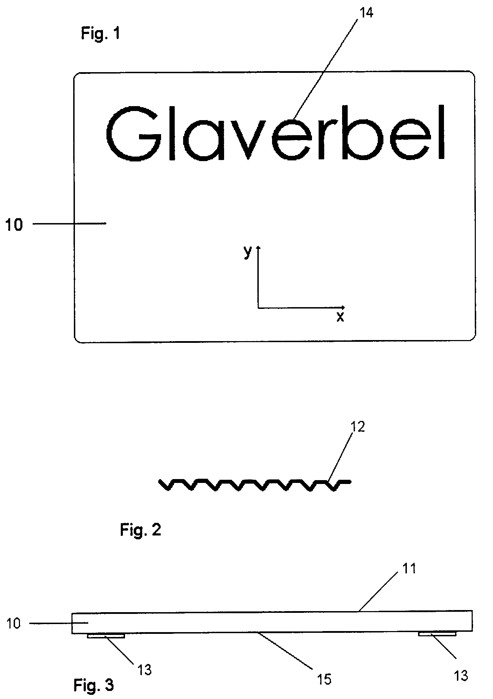

The mouse mat 10 shown in the drawings comprises a single sheet of tempered, patterned glass. Its working surface 11, i.e. the surface over which a computer mouse will be moved by a user, is provided with a friction surface 12 in the form of a regular pattern formed as a surface relief. The depth of the relief in the surface of the glass may be between about 0.2 and 2 mm; in this example the surface relief has a pitch of about 10 ridges per centimetre. As illustrated in Fig. 2, the surface pattern in this particular case takes the form of a regular series of point impressions in the glass surface; the pattern has the same form in orthogonal directions x and y.. The surface relief need not be a uniform pattern and, indeed, a series or patchwork of different surface relief patterns may be used.

In this example, the patterned glass is produced by passing hot, viscous glass as it leaves a glass furnace between two rollers, at least one of which is a patterned roller; this forms a substantially flat glass sheet with the patterned roller forming a pattern as a surface relief in the surface of the glass. The glass is cut to a desired size and its edges are bevelled or rounded to remove any sharp corners. The working surface may typically be between about 2 mm and 6 mm thick; it may be about 3 mm or about 4 mm thick. The mouse mat may be substantially rectangular. It may have a width of between about 20 cm and 40 cm and it may have a depth of between about 20cm and 30cm. Possible sees are, for example, about 27cm wide by about 21 cm deep or about 30cm wide by about 25 cm deep. One or more corners of the working surface and/or of the mouse mat may be provided with a radial profile (not shown).

The working surface is supported on optional cushioning means 13 provided in this case by four foam rubber pads, one positioned towards each corner of the mouse mat. A cushioning means may cover the entire underside of the mouse mat, for example in the form of a foam rubber pad on which the working surface is supported.

A publicity message or logo 14 is displayed by the mouse mat. In this example, the publicity message is stuck or printed onto an underside 15 of the mouse mat so that it is visible in normal use through the working surface. Alternatively, or additionally, a publicity message may be printed stuck or embossed at the working surface. A publicity message may form part of the working surface, for example, by being incorporated into the surface relief or forming part of a pattern or friction surface applied to or forming part of the working surface. One particularly convenient way of applying an image to the mouse mat may be by silk screen printing.

## Claims

1. A mouse mat comprising a working surface over which a computer mouse is intended to be moved characterised in that the working surface is made wholly or partially of glass or of a glass-like material.

2. A mouse mat in accordance with Claim 1, in which the working surface is made wholly or partially of toughened glass.

3. A mouse mat in accordance with Claim 2, in which the working surface is made wholly or partially of tempered glass.

4. A mouse mat in accordance with any preceding claim, in which the working surface comprises a substantially rigid glass plate.

5. A mouse mat in accordance with any preceding claim, in which at least a portion of the working surface of the mouse mat is provided with a friction surface.

6. A mouse mat in accordance with Claim 5, in which the friction surface comprises a relief which forms a surface layer of the working surface.

7. A mouse mat in accordance with Claim 6, in which the working surface is provided as a patterned glass.

8. A mouse mat in accordance with any one of Claims 5 to 7, in which the frictional surface comprises a pattern of substantially regularly spaced peaks and crests in the working surface having, in a first direction a density of between about 5 and 20 peaks per centimetre.

9. A mouse mat in accordance with Claim 8, in which the frictional surface comprises a pattern of substantially regularly spaced peaks and crests in the working surface having a density of between about 5 and 20 peaks per centimetre in a second direction which is substantially perpendicular to the first direction.

10. A mouse mat in accordance with any preceding claim, in which the working surface is supported on cushioning means.

11. A mouse mat in accordance with any preceding claim, in which an image is viewable from the working surface side of the mouse mat.

12. A mouse mat in accordance with Claim 11, in which the image is provided beneath the working surface of the mouse mat.

13. A mouse mat in accordance with Claim 11 or Claim 12 in which the image forms at least a portion of the working surface of the mouse mat.

14. A publicity or advertising object comprising a mouse mat in accordance with any preceding claim.
